# EUROPEAN PATENT APPLICATION

(11) **EP 4 756 214 A1**
(43) Date of publication of application: **10.06.2026**
(21) Application number: 24217120.5
(22) Date of filing: 03.12.2024
(51) Int. Cl.: F03D 7/02, F03D 17/00

(54) **WIND DIRECTION ESTIMATOR**

(71) Applicant: Siemens Gamesa Renewable Energy A/S, 7330 Brande (DK)
(72) Inventor: Aho, Jacob, Calais, 05648 (US); Esbensen, Thomas, 7400 Herning (DK)
(74) Representative: SGRE-Association

(57) **Abstract**

The invention describes a wind direction estimator (1) for a wind turbine (2), comprising a means of receiving wind direction measurements (250) from a wind direction sensor (25) of a wind turbine (2) during operation of the wind turbine (2); an N-dimensional compensation function (10) configured to receive N input values (101, ..., 10N, 26m, 240) and to output a wind direction offset (100) on the basis of the N received input values (101, ..., 10N, 26m, 240), wherein N is at least 2 and wherein each input value (101, ..., 10N, 26m, 240) relates to an operational variable of the wind turbine (2); and a means of adding a computed wind direction offset (100) to a received wind direction measurement (250) to obtain a wind direction estimate (Dest). The invention further describes a method of estimating a wind direction (Dtrue) .

## Description

### Background

A common type of wind turbine is a horizontal-axis wind turbine, with an aerodynamic rotor that generally comprises three rotor blades mounted to a hub at the front of a nacelle. The nacelle is mounted on top of a tower and can be yawed in order to turn the aerodynamic rotor to face into the wind. Usually, the nacelle orientation (and therefore also the rotational axis of the aerodynamic rotor) aligns with the wind direction, and yaw misalignment - the difference between the nacelle orientation and the wind direction - would be zero. Since the amount of energy that can be extracted from the wind decreases with increasing yaw misalignment, it is usually the aim of a wind turbine controller to minimize the yaw misalignment. However, this can be difficult to achieve, since wind direction fluctuates and rarely remains steady for any length of time.

Usually, the relative wind direction (or simply "wind direction" in the following) is measured by a suitable device mounted on the roof of a wind turbine's nacelle. However, during operation of the wind turbine, the airflow downwind of the aerodynamic rotor is disturbed by the moving rotor blades and structures such as railings, coolers, etc. on the nacelle roof. The extent of the disturbance depends on factors such as the magnitude of the wind speed, the yaw misalignment, the rotational speed of the aerodynamic rotor, the pitch angles of the rotor blades, the amount of power being extracted from the wind, etc. For this reason, measurements reported by such a wind direction sensor generally do not correspond to the direction of the freestream airflow arriving at the aerodynamic rotor.

It is known to correct "raw" wind direction sensor data to obtain more accurate data that can be used by the wind turbine controller to yaw the nacelle. For example, it is known to perform a series calibration in which the measured wind direction is adjusted in a first stage using the measured wind speed and adjusted further in a separate second stage using a yaw offset value. This concept is based on the assumption that the amount by which the incoming airflow is disturbed is determined largely by the rotational speed of the aerodynamic rotor, which depends to a large extent on the wind speed. Using empirically collected data, it is possible to determine the effect of wind speed on the wind direction measurements, which can then be corrected to obtain a more accurate wind direction estimate. The wind direction estimate can then be used by the wind turbine controller to compute and minimize the yaw misalignment. However, a problem with this prior art approach is that by compensating first for wind direction and then for yaw offset, the initial wind direction compensation will not be correct for that particular yaw offset. Similarly, by compensating first for yaw offset and then for wind speed, the initial yaw offset compensation will not be accurate for that particular wind speed.

In an alternative approach, the wind direction data can be calibrated on the basis of wind speed data and yaw offset command (or measured yaw misalignment). The yaw offset shall be understood as the desired nacelle orientation relative to the wind. The yaw error shall be understood as the control error of the yaw position, i.e. the difference (in degrees) between the actual nacelle orientation and the desired nacelle orientation (indirectly given by the yaw offset). The yaw error quantifies the undesired misalignment to the wind direction. The difference between the nacelle orientation and the wind direction is referred to herein as the "yaw misalignment".

In this approach, the wind turbine can be intentionally operated at a yaw misalignment relative to the wind direction, allowing a wind turbine to be optimally controlled, for example in respect of the wake(s) of one or more neighbouring wind turbine installations, in order to avoid loading of certain wind turbine components, etc. However, if the wind direction calibration is not sufficiently accurate, a yaw offset command will not result in the desired yaw misalignment. This can be the case if, for example, wind direction calibration primarily accounts for the impact of wind speed at a zero yaw misalignment but does not accurately capture the impact of wind speed for non-zero yaw misalignments.

It is therefore an object of the invention to provide an alternative way of calibrating a wind direction sensor of a wind turbine.

This object is achieved by the claimed wind direction estimator and by the claimed method of estimating a wind direction on the basis of a measured wind direction.

### Description

In the context of the invention, a wind turbine shall be understood to be the conventional type as described above, i.e. with a nacelle mounted on a tower, an aerodynamic rotor mounted at the front of the nacelle, and a yaw system capable of turning the nacelle so that the aerodynamic rotor faces into the wind. The wind turbine shall be understood to comprise a yaw controller configured for example to actuate drive motors of the yaw system.

According to the invention, the wind direction estimator comprises a means of receiving wind direction measurements from a wind direction sensor of a wind turbine during operation of the wind turbine. The wind direction estimator further comprises a module adapted to execute an N-dimensional compensation function which is configured to receive a plurality of input data streams. It shall be understood that N is an integer greater than or equal to 2. Each input data stream comprises input values relating to a specific operational variable of the wind turbine, i.e. each input value quantifies an operational variable of the wind turbine. On the basis of the received input values, the N-dimensional compensation function generates a wind direction offset. The wind direction estimator is configured to add the wind direction offset, generated in this manner, to the wind direction measurement to obtain a wind direction estimate which can then be used by the wind turbine's yaw controller to yaw the nacelle as necessary in order to align the aerodynamic rotor with the estimated wind direction.

As indicated above, each input value can be a stream of data representing the respective operational parameter. The various operational parameters of the wind turbine can be measured or sensed by different means, so that the various input values may be updated at different rates to each other and/or at different rates to the wind direction measurement. In the context of the invention, it shall be understood that a wind direction measurement and the input values used by the N-dimensional compensation function to generate the wind direction offset arrive within a suitably brief time interval, for example within 1 second. A wind direction offset may be computed at regular intervals, for example at a rate in the order of 1 Hz to 25 Hz.

The inventive calibration method can directly use each received input value, i.e. the wind direction offset is updated at the same rate as the highest input value sampling rate. For example, if wind speed is measured at a rate of 25 Hz while the yaw misalignment is updated at a rate of 1 Hz, the wind direction offset is updated at a rate of 25 Hz. The wind direction measurements may arrive at a different rate. Therefore, in a preferred embodiment of the invention, the calibration method includes a step of oversampling one or more input signals by upsampling or downsampling, as appropriate.

Alternatively or in addition, the inventive calibration method can include a step of averaging a series of values. For example, the wind direction offset values can be averaged before adding the averaged offset to the measured wind direction. Alternatively, the received input values can be averaged, and the wind direction offset can be determined using the averaged input values. Equally, the wind direction offset can be determined without averaging any of the inputs, added to the wind direction measurement, and a series of such adjusted wind directions is averaged to obtain the calibrated wind direction.

Some operating variables can exhibit fluctuations, i.e. the incoming values can contain outliers which differ significantly from the underlying trend. Therefore, in a preferred embodiment of the invention, the calibration method includes a step of filtering an input value. For example, wind speed measurements can be filtered to avoid distortion of the wind direction offset by outlier wind speed measurements. An advantage of the inventive wind direction estimator is that a very precise estimation of the wind direction is obtained by preserving the complex interdependencies of multiple variables. The inventive calibration method takes into account that the wind speed contribution can depend on the yaw offset and at the same time, the yaw offset contribution can depend on the wind speed. Calibration of the wind direction sensor using the inventive method is therefore more accurate than the prior art, in which such factors are dealt with separately and consecutively, i.e. the prior art methods effectively separate the effects of the variables used to calibrate the wind direction measurement.

According to the invention, the wind turbine is equipped with a wind direction sensor and comprises an instance of the claimed wind direction estimator. The estimated wind direction provided by the wind direction estimator is used by a controller of the wind turbine to control the yaw system.

The inventive method comprises obtaining wind direction measurements during operation of a wind turbine; obtaining N input values, each relating to an operational variable of the wind turbine; applying an N-dimensional compensation function to the N input values to generate a wind direction offset; and adding the wind direction offset to a wind direction measurement to obtain a wind direction estimate that can be used by a control unit of the wind turbine.

The step of adding the computed wind direction offset to the measured wind direction essentially calibrates the wind direction sensor. For this reason, the inventive method can be referred to herein as a calibration method, and the computed wind direction offset can be referred to herein as a "calibration offset" or "compensation offset". The N-dimensional compensation function can be referred to simply as a "calibration function" or "compensation function" in the following.

The units or modules of the claimed wind direction estimator can be completely or partially realised as a computer program with program elements for performing steps of the claimed method when the computer program is executed by a processor of a control unit such as a wind turbine controller.

Particularly advantageous embodiments and features of the invention are given by the dependent claims, as revealed in the following description. Features of different claim categories may be combined as appropriate to give further embodiments not described herein.

The term "freestream" as used herein shall be understood to mean the air upstream of, and unaffected by, the aerodynamic rotor. As used herein, the expressions "relative wind direction" and "wind direction" shall be understood as the orientation, in a horizontal plane, of the freestream airflow relative to the rotational axis of the aerodynamic rotor. By definition, the relative wind direction has the same magnitude but opposite sign as the yaw misalignment.

A wind direction sensor can be mounted at any suitable position. Preferably, the wind direction sensor used to obtain wind direction measurements is mounted downwind of the aerodynamic rotor of the wind turbine, for example the wind direction sensor may be mounted on the roof of the nacelle, halfway along the front end of the nacelle. In a particularly preferred embodiment of the invention, the wind direction sensor is an ultrasonic device. In other preferred embodiments, the wind direction sensor can be a pressure-based spinner sensor, a lidar device, etc. Alternatively, the wind direction sensor can be a device such as a mechanical wind vane. Regardless of the choice of sensor, it will require calibration in order to reliably deliver accurate wind direction measurements.

A wind turbine is generally equipped with various sensors in order to be able to monitor its performance and to react to changes in its operating conditions. For example, in order to be able to optimize the output power, it is usual to pitch the rotor blades depending on wind speed. To this end, the wind turbine is preferably equipped with a wind speed sensor such as a cup anemometer, a vane anemometer, an ultrasonic anemometer, etc. This may be positioned near the wind direction sensor. Alternatively, the wind direction sensor and wind speed sensor may be realised as a single unit, i.e. a sensor that measures both wind speed and wind direction.

In a preferred embodiment of the invention, the wind turbine comprises a means of determining a yaw misalignment of the nacelle.

The expressions "operational variable" and "operating parameter" shall be understood to be synonyms and may be used interchangeably herein. Similarly, a series of input values received by the N-dimensional compensation function can be referred to as an input data stream.

An input value (units are given in parentheses) can be any of: a wind speed measurement (ms⁻¹), a wind speed estimate (ms⁻¹), a yaw offset (°), a yaw misalignment measurement (°), a yaw misalignment estimate (°), the momentary output power of the wind turbine (W), the current rotor blade pitch angle (°), the momentary rotational speed of the aerodynamic rotor (rpm), a rotor blade load measurement (N), air density (kg/m³), thrust of the aerodynamic rotor (N). To this end, the wind turbine is equipped with suitable sensors to detect the desired input values and/or the wind turbine is provided with modules adapted to estimate or compute the desired input values.

The N-dimensional compensation function can be realised in various ways. Depending on its realisation, the N-dimensional compensation function may generate the wind direction offset through computation, deduction, inference, interpolation, etc.

In a particularly preferred embodiment of the invention, the N-dimensional compensation function is realised as a look-up table comprising at least two dimensions. For example, a twodimensional look-up table can be visualized as a three-dimensional lattice of nodes defined by the two input values (along two axes) and the wind direction offset (along a third axis), in which each node defines a wind direction offset value. Two axes of the lattice represent two input values (for example yaw misalignment, wind speed) at predefined intervals (using the above example: 2° intervals for yaw misalignment, 5 ms⁻¹ intervals for wind speed).

The input values received by the N-dimensional compensation function will most likely not correspond to the node intervals, and the associated wind direction offset will therefore not coincide with a lattice point. In a particularly preferred embodiment of the invention, a wind direction offset is therefore obtained by interpolating between the nodes of the lattice using a suitable technique such as bilinear interpolation when N = 2, trilinear interpolation when N = 3, etc. Preferably, spline interpolation is deployed to identify the most appropriate wind direction offset on the basis of the received input values.

In an alternative embodiment, the N-dimensional compensation function is realised as an analytical function that mathematically models the relationship between the input variables and the wind direction offset. This analytical function - expressed as f(x₁, x₂, ..., x_{N}) - takes N input parameters (x₁, x₂, ..., x_{N}) and computes the corresponding wind direction offset. The function can be expressed as a polynomial, a combination of trigonometric functions, or any other suitable mathematical expression that accurately captures the underlying physical phenomena. This allows for a precise and continuous adjustment of the wind direction offset based on the given inputs.

In a further alternative embodiment, the N-dimensional compensation function is realised as a machine-learning algorithm trained to infer a wind direction offset on the basis of two or more received input values.

Training such a machine learning algorithm can be done by choosing two or more input values for use by the intended wind direction estimator, for example from the list given above. Training data sets comprising those input values are then prepared. A ground truth is then assigned to each training data set. For example, a ground truth can be the most suitable wind direction offset for that set of input values. The machine learning algorithm is then trained on these data sets to predict a wind direction offset approximating the ground truth. The accuracy of the machine learning algorithm depends on the number of training data sets, and a suitably large number of training data sets is therefore used to train the machine learning algorithm for a specific combination of input values.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a plan view of a wind turbine;
Figure 2 illustrates various aspects of wind turbine alignment relative to the freestream wind;
Figure 3 is a block diagram of an exemplary embodiment of the inventive wind direction estimator;
Figures 4 and 5 illustrate the embodiment of Figure 3;
Figure 6 and 7 indicate further possible embodiments of the inventive wind direction estimator;
Figure 8 and 9 illustrate prior art methods of calibrating a wind direction measurement;
Figure 10 shows a further possible embodiment of the inventive wind direction estimator.

In the diagrams, like numbers refer to like objects throughout. Objects in the diagrams are not necessarily drawn to scale.

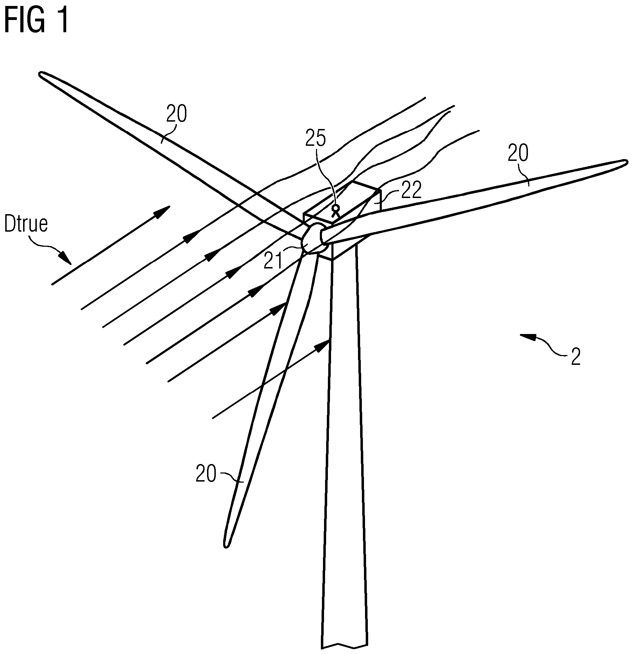

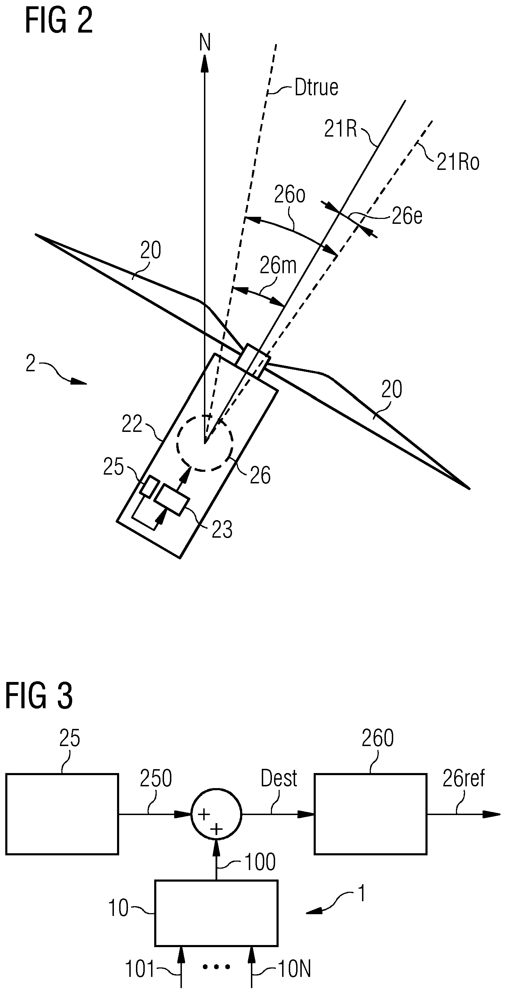

Figure 1 shows a plan view of the most common type of wind turbine 2, looking down onto the roof of its nacelle 22, and Figure 2 illustrates various aspects of wind turbine alignment relative to the freestream wind. At the front end of the nacelle 22, an aerodynamic rotor 20, 21 (comprising three rotor blades 20 mounted to a hub 21) is being turned by the incoming wind. Upwind of the aerodynamic rotor 20, 21, the incoming wind has a clearly discernible direction Dtrue as indicated by the parallel lines. The wind turbine 2 is equipped with a wind direction sensor 25 mounted on the roof of the nacelle 22. Ideally, the wind direction sensor 25 would report the "true" wind direction Dtrue, since this is the most relevant information for the task of minimizing the yaw error. However, the airflow arriving at the wind direction sensor 25 has been disturbed by the rotor blades 20, as indicated by the more random lines. The measurements 250 output by the sensor 25 therefore do not accurately report the wind direction Dtrue upwind of the aerodynamic rotor 20, 21 and the reported wind direction 250 can be "off" by several degrees. With only the measured wind direction as input, a wind turbine controller is therefore often unable to accurately align the aerodynamic rotor 20, 21 into the wind.

As explained with the aid of Figure 2, an important aim of a wind turbine controller 23 is to issue commands to control drive motors of a yaw assembly 26 so that the nacelle 22, and therefore also the rotation axis 21R of the aerodynamic rotor 20, 21 is aligned with the direction Dtrue of the incoming wind. As explained above, the nacelle orientation 21R would ideally be aligned with the wind direction Dtrue, i.e. the yaw misalignment 26m would be zero. In practice, this is difficult to achieve owing to various factors, one of which is the discrepancy between the freestream wind direction Dtrue and the measured wind direction 250. The resulting yaw misalignment 26m means that the aerodynamic rotor 20, 21 is not correctly aligned with the freestream wind direction and cannot extract the maximum possible energy from the wind, thereby sacrificing revenue. Furthermore, yaw misalignment 26m can result in uneven loading of the rotor blades 20 which is passed on to various other drivetrain components such as drive shafts, bearings, etc., reducing their service lifetimes and increasing the overall cost of energy.

The diagram also indicates an exemplary yaw error 26e, i.e. the control error of the yaw system. The yaw error 26e is the difference (in degrees) between the actual nacelle orientation 21R (i.e. the rotation axis of the hub 21) and the intended nacelle orientation 21R₀. Furthermore, the diagram indicates the yaw offset 26o, i.e. the difference (in degrees) between the yaw misalignment 26m and the yaw error 26e.

Figure 3 is a block diagram that shows an exemplary embodiment of the inventive wind direction estimator 1. The wind direction estimator 1 may be assumed to be realised as part of a wind turbine controller 23. The wind direction estimator 1 receives wind direction measurements 250 from a wind direction sensor 25, mounted for example on the roof of the nacelle 22 of the wind turbine 2. The wind direction estimator 1 comprises an N-dimensional compensation function 10 configured to receive two or more input values 101 - 10N from which it deduces a wind direction offset 100 which, when added to the measured wind direction 250, will result in a favourably accurate wind direction estimate Dest. This accurate estimate Dest is then forwarded to a yaw control module 260 (which can also be realised as part of the wind turbine controller 23) which determines whether a yaw correction is necessary and issues commands 26ref as appropriate to the wind turbine's yaw system 26.

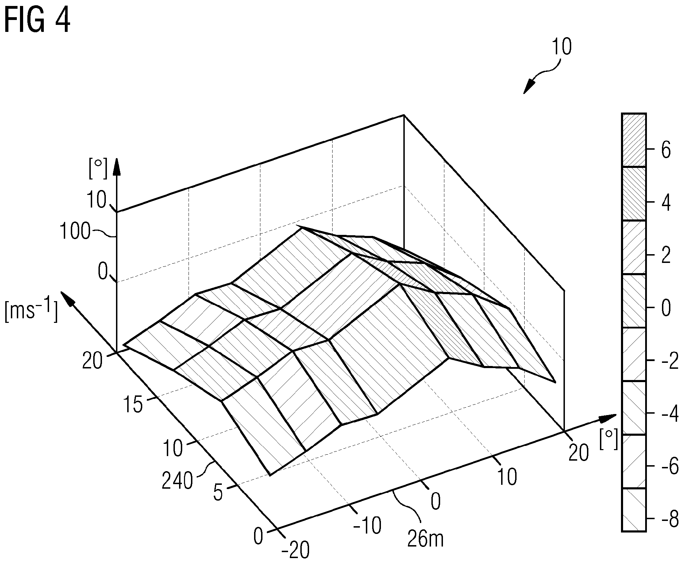

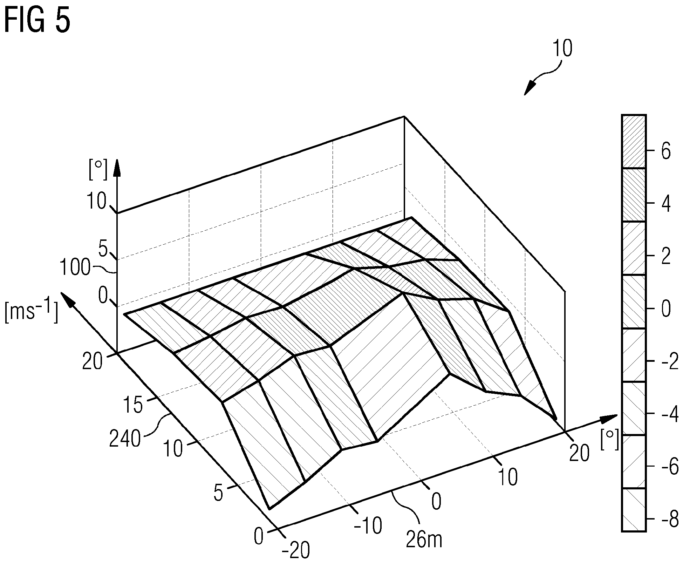

The N-dimensional compensation function 10 may be realised in a number of ways. For example, as indicated in Figures 4 and 5, the N-dimensional compensation function 10 can be realised as a multi-dimensional lookup table configured to determine the wind direction offset 100 using values of wind speed 240 and yaw misalignment 26m using a 2-dimensional look-up table.

The wind speed values 240 can be provided by a wind speed sensor 24 such as an ultrasonic anemometer mounted on the nacelle roof or other suitable location. In Figure 4, the wind speed values lie within the range 0 ms⁻¹ to 20 ms⁻¹. The yaw misalignment values 26m can be provided by the wind turbine controller 26 and can be measured or estimated as explained above. Here, the yaw misalignment values lie within the range -20° to +20°. On the right, a legend relates the patterns (used to fill the planes between lattice nodes) to the range of wind direction offsets 100, in the range -10° to +10°.

Figure 5 illustrates a further embodiment of the N-dimensional compensation function 10 of Figure 4.

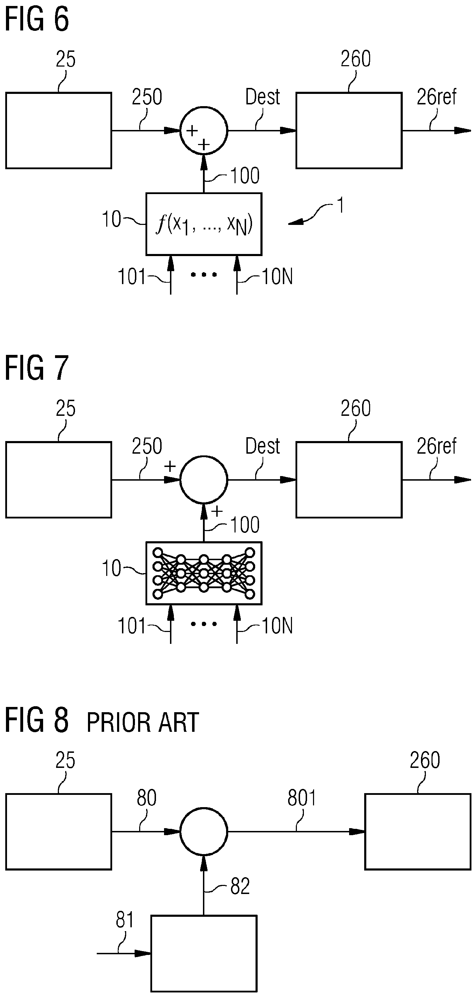

In Figure 6, the N-dimensional compensation function 10 of the wind direction estimator 1 is an analytical function that mathematically models the relationship between N operational variables x₁, x₂, ..., x_{N} and wind direction offset 100. The analytical function can be a polynomial, a combination of trigonometric functions, or any other suitable mathematical expression.

In Figure 7, the N-dimensional compensation function 10 of the wind direction estimator 1 is realised as a machine learning algorithm trained to deduce a wind direction offset from the input values provided.

Figure 8 illustrates a prior art approach which uses a single input variable to correct or compensate a wind direction measurement 80, i.e. it applies a one-dimensional (n=1) correction. This can be implemented by assigning each wind speed interval to a predetermined offset. For example, a series of six wind speed intervals may be 0, 5, 10, 15, 20, 25 (ms⁻¹), and a corresponding series of six predetermined wind direction adjustments may be 0, 1, 2, 1, 2, 3 (°). During operation of the wind turbine, the interval of the measured wind speed 81 is determined (e.g. interval "15" for a measured wind speed of 16.5 ms⁻¹). The corresponding adjustment 82 (in this case 1°) is then added to the wind direction measurement 80. For example, if the wind direction sensor reports a wind direction measurement 80 of 4.8°, the adjusted wind direction 8 is 5.8° for all wind speeds in interval "15". The corrected wind direction value 801 is then forwarded to the yaw controller.

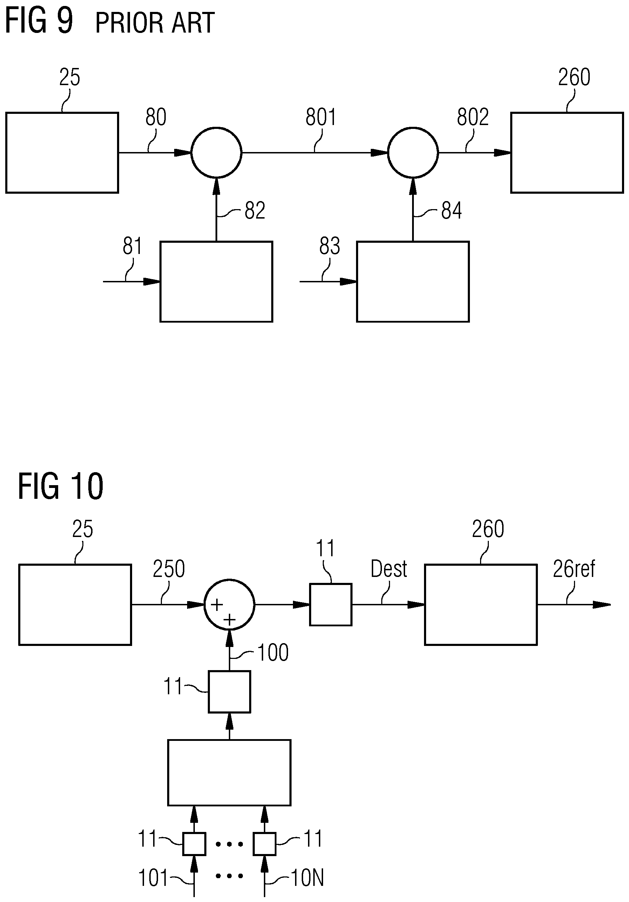

Figure 9 illustrates a further prior art approach, which can be regarded as an elaboration of the technique described in Figure 8. This approach applies a two-stage correction to the measured wind direction 80: the wind direction measurement 80 is first compensated as described above using the measured or estimated wind speed 81, i.e. the first stage of this method applies the one-dimensional (n=1) correction described above to obtain an adjusted wind direction 801. In a subsequent stage, the compensated wind direction value 801 is then further adjusted using a yaw offset value 83. This can be implemented by assigning each entry in a series of yaw offset intervals to a corresponding wind direction offset. For example, a series of five yaw offset intervals may be -10, - 5, 0, 5, 10 (°), and a corresponding series of five predetermined offsets may be -2, -1, 0, 1, 2 (°). Using the corrected wind direction (5.8°) of the previous example and a yaw offset 83 of -11°, the corresponding wind direction adjustment 84 is -2°, so that the adjusted wind direction 802 is now 3.8°.

Figure 10 illustrates a further embodiment of the invention. Similar to Figures 3, 6 and 7, the wind direction estimator 1 comprises an N-dimensional compensation function 10 and computes a wind direction offset 100. The drawing indicates the various stages at which a mean or average may be computed: any of the input values 101 - 10N may be averaged before use by the compensation function; the wind direction offset 100 may be averaged before being added to the measured wind direction; the wind direction offset 100 may be averaged before being output to the wind turbine controller 260. The wind direction estimator 1 may comprise any number of such mean computation modules 11, and each mean computation modules 11 can be adapted to apply a suitable averaging function such as an arithmetic mean, a weighted mean, etc., as appropriate.

Although the present invention has been disclosed in the form of preferred embodiments and variations thereon, it will be understood that numerous additional modifications and variations could be made thereto without departing from the scope of the invention. For example, although the inventive method is described above in the context of calibrating a wind direction sensor that is installed on the nacelle roof and therefore "behind" the plane of the aerodynamic rotor, the inventive method can equally be deployed to calibrate a pressure-based sensor installed in the hub or spinner, to calibrate a lidar sensor, etc.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A wind direction estimator (1) for a wind turbine (2), comprising
- a means of receiving wind direction measurements (250) from a wind direction sensor (25) of a wind turbine (2) during operation of the wind turbine (2);
- an N-dimensional compensation function (10) configured to receive N input values (101, ..., 10N, 26m, 240) and to output a wind direction offset (100) on the basis of the N received input values (101, ..., 10N, 26m, 240), wherein N is at least 2 and wherein each input value (101, ..., 10N, 26m, 240) relates to an operational variable of the wind turbine (2); and
- a means of adding a computed wind direction offset (100) to a received wind direction measurement (250) to obtain a wind direction estimate (Dest).

2. A wind direction estimator according to the preceding claim, wherein an input value (101, ..., 10N) to the N-dimensional compensation function (10) comprises any of: measured wind speed (240), estimated wind speed, yaw offset command, measured yaw misalignment (26m), estimated yaw misalignment, output power, rotor blade pitch angle, rotational speed of the aerodynamic rotor (20, 21), rotational speed of a drivetrain component, measured rotor blade load, air density, thrust.

3. A wind direction estimator according to the preceding claim, wherein the N-dimensional compensation function (10) is configured to generate a wind direction offset (100) at least on the basis of a wind speed value (240) and a yaw misalignment value (26m).

4. A wind direction estimator according to any of the preceding claims, wherein the N-dimensional compensation function (10) is configured to generate a wind direction offset (100) at least on the basis of a wind speed value (240) and a yaw offset value (26o).

5. A wind direction estimator according to any of the preceding claims, wherein the N-dimensional compensation function (10) is realised as a look-up table comprising two or more dimensions.

6. A wind direction estimator according to the preceding claim, wherein the N-dimensional compensation function (10) is adapted to perform spline interpolation.

7. A wind direction estimator according to any of the preceding claims, wherein the N-dimensional compensation function (10) is realised as an analytical function adapted to mathematically model the relationship between N operational variables of the wind turbine (2) and wind direction offset (100).

8. A wind direction estimator according to any of the preceding claims, wherein the N-dimensional compensation function (10) is realised as a machine-learning algorithm trained to infer a wind direction offset (100) on the basis of the received input values (101, ..., 10N, 26m, 240).

9. A wind turbine (2) comprising
- a nacelle (22) mounted on a tower, an aerodynamic rotor (20, 21) mounted at the front of the nacelle (22), and a yaw system (26) adapted to turn the nacelle (22);
- a wind direction sensor (25);
- a wind direction estimator (1) according to any of claims 1 to 8; and
- a wind turbine controller (23) configured to control the yaw system (26) on the basis of the estimated wind direction (Dest) provided by the wind direction estimator (1) .

10. A wind turbine according to the preceding claim, wherein the wind direction sensor (25) is mounted downwind of the aerodynamic rotor (20, 21) of the wind turbine (2).

11. A wind turbine according to claim 9 or claim 10, wherein the wind direction sensor (25) is an ultrasonic sensor.

12. A wind turbine according to any of claims 9 to 11, comprising a wind speed sensor (24).

13. A wind turbine according to any of claims 9 to 12, comprising a means of determining a yaw misalignment (26m).

14. A method of estimating a wind direction (Dtrue), which method comprises
- receiving wind direction measurements (250) from a wind direction sensor (25) of a wind turbine (2) during operation of the wind turbine (2);
- obtaining N input values (101, ..., 10N, 26m, 240), wherein N is at least 2 and wherein each input value (101, ..., 10N, 26m, 240) quantifies an operational variable of the wind turbine (2);
- applying an N-dimensional compensation function (10) to the N input values (101, ..., 10N, 26m, 240) to generate a wind direction offset (100); and
- adding a wind direction offset (100) to a wind direction measurement (250) to obtain a wind direction estimate (Dest).

15. A computer program product comprising a computer program that is directly loadable into a memory of a wind turbine controller (23) of a wind turbine (2) according to any of claims 9 to 13 and which comprises program elements for performing steps of the method according to claim 14 when the computer program is executed by the wind turbine controller (23) .
